(19) Europäisches Patentamt / European Patent Office / Office européen des brevets

(11) **EP 4 137 839 A1**

(12) **EUROPEAN PATENT APPLICATION**

(43) Date of publication:
**22.02.2023 Bulletin 2023/08**

(21) Application number: **21191838.8**

(22) Date of filing: **18.08.2021**

(51) International Patent Classification (IPC):
$G01S\ 7/35^{(2006.01)}$    $G01S\ 13/34^{(2006.01)}$
$G01S\ 13/58^{(2006.01)}$    $G01S\ 13/87^{(2006.01)}$
$G01S\ 13/931^{(2020.01)}$    $G01S\ 13/46^{(2006.01)}$

(52) Cooperative Patent Classification (CPC):
**G01S 7/352; G01S 13/34; G01S 13/584;
G01S 13/872; G01S 13/931;** G01S 2013/93271

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Veoneer Sweden AB
447 37 Vårgårda (SE)**

(72) Inventors:
- **Klotzbuecher, Dirk
Niederwerrn (DE)**
- **Beck, Julian
Niederwerrn (DE)**
- **Poiger, Walter
Niederwerrn (DE)**
- **Schwert, Christian
Niederwerrn (DE)**
- **Frank, Christian
Niederwerrn (DE)**

(74) Representative: **Westpatent AB
Almekärrsvägen 11
443 39 Lerum (SE)**

(54) **LOW LEVEL RADAR FUSION FOR AUTOMOTIVE RADAR TRANSCEIVERS**

(57) An automotive radar system (100) comprising at least a first radar sensor (110), a second radar sensor (120), and a processor (130),
where each radar sensor (110, 120) is arranged to transmit a radar signal over a radar bandwidth,
where each radar sensor (110, 120) is arranged to determine respective ranges to one or more detected targets (140), where each determined range is associated with a complex value (Vmn) in a range vector,
where the processor (130) is arranged to determine a difference in the ranges determined by the first radar sensor (110) and by the second radar sensor (120),
where the processor (130) is arranged to convert the difference in ranges to an intermediate frequency, IF, phase value ($\phi_{IF}$) by relating the difference in ranges to the radar bandwidth (BW), and
where the processor (130) is arranged to adjust the complex values (Vmn) in the range vectors by the IF phase value ($\Phi_{IF}$) and determine an angle (a) to at least one of the detected targets (140) based on the adjusted complex values in the range vectors from each radar sensor (110, 120).

FIG. 1

EP 4 137 839 A1

**Description**

DESCRIPTION OF THE DISCLOSURE

The present disclosure relates to automotive radar systems. There are disclosed methods, processing units, and systems for coherent processing of radar signals from two or more radar sensors.

Automotive radar systems are under constant development. Ever increasing demands on performance metrics such as radar range and angular resolution drives this development. However, as more complexity is introduced into automotive radar systems, cost also increases, which is undesired.

In order to meet the increasing requirements on angular resolution, radar systems based on large antenna arrays can be used, i.e., antenna arrays spanning over a large aperture and comprising a large number of antenna elements. However, it is technically challenging to distribute a coherent radio frequency reference signals to the antenna units, especially at the higher frequency radar bands such as the 77 GHz bands.

Also, the number of radar transceivers on vehicles is increasing. Today, it is not uncommon to see five or more radar transceivers operated in combination on a single vehicle. Each such radar transceiver generates cost. Thus, there is a desire to reduce the number of radar transceivers on a vehicle, without comprising overall radar system performance.

There is a need for automotive radar systems with improved angular resolution, which are less costly in terms of hardware.

There is also a need for techniques which allow to reduce the number of radar transceivers assembled on a single vehicle.

It is an object of the present disclosure to provide an improved automotive radar system. This object is at least in part obtained by an automotive radar system comprising at least a first radar sensor, a second radar sensor, and a processor. Each radar sensor is arranged to transmit a radar signal over a radar bandwidth, and to determine respective ranges to one or more detected targets, where each determined range is associated with a complex value in a range vector. The processor is arranged to determine a difference in the ranges determined by the first radar sensor and by the second radar sensor, and to convert the difference in ranges to an intermediate frequency (IF) phase value $\phi_{IF}$ by relating the difference in ranges to the radar bandwidth. The processor is arranged to adjust the complex values in the range vectors by the IF phase value $\Phi_{IF}$ and determine an angle a to at least one of the detected targets based on the adjusted complex values in the range vectors from each radar sensor.

By accounting for the IF phase, coherent processing of the range information from each radar sensor is enabled. Thus, the two radar sensors can be processed jointly as one large array, which increases the angle resolution significantly, due to the increase in effective aperture dimension of the joint antenna array. By means of coherent processing on an IF level, there is no need for common RF source. This can be applied to more than two radar sensors and can obviate the need for a high performance front radar sensor.

According to some aspects, each radar sensor comprises an antenna array configured with a plurality of transmit-receive antenna pairs, where each transmit-receive antenna pair is associated with a respective range vector.

When each radar sensor comprises its own antenna array, the radar sensor is enabled to determine an angle to a target using only the radar data obtained locally.

According to some aspects, the processor is arranged to determine the angle a to at least one of the detected targets by forming a matrix **V** of complex elements. Each row of the matrix **V** corresponds to a respective radar sensor, and each column corresponds to a transmit-receive antenna pair of the radar sensor. Each element of the matrix corresponds to the complex value in the range vector of the corresponding radar sensor and transmit-receive antenna pair at a pre-determined index in the range vector.

This means that each radar sensor reports a complex value indicative of detected signal energy corresponding to a given range and radial velocity at a given transmit-antenna pair in its antenna array, and that the processor composes a matrix **V** where each such complex value forms an element.

According to some aspects, the processor is arranged to determine the angle a by performing a phase alignment over the matrix **V,** where each row is rotated in dependence of the first element in the row.

This essentially means that the first transmit-receive antenna pair of each radar sensor is taken as phase reference for that radar sensor, such that each row in the matrix indicates phase relative to the first transmit-receive antenna pair of that radar sensor.

According to some aspects, the processor is arranged to determine the angle a by applying a pre-determined calibration phase rotation to at least some of the elements of the matrix **V.**

To account for differences due to the fact that each radar sensor may not be mounted in exactly the same way, i.e., with small differences in bore-sight direction and height over ground, the pre-determined calibration may be performed in order to align the outputs from the different sensors.

According to some aspects, the processor is arranged to determine the angle a to at least one of the detected targets by zero-padding the rows of the matrix **V** in dependence of the IF phase value $\Phi_{IF}$ for each radar sensor with respect to a pre-determined reference radar sensor.

Zero-padding may be required between columns to account for irregular spacing between antenna elements in each radar sensor, and zero-padding may be required in order to account for differences and irregularities in the IF phase between radar sensors.

According to some aspects, the processor is arranged to determine the angle a to at least one of the detected targets by zero-padding the columns of the matrix **V** in dependence of the geometry of the transmit-receive antenna pairs of each radar sensor.

This is beneficial if the IF phase differs between different radar sensors.

According to some aspects, the processor is arranged to determine the angle a to at least one of the detected targets by a two-dimensional Discrete Fourier Transform, DFT, of the matrix **V** after at least phase adjustment by at least the IF phase value $\Phi_{IF}$ for each radar sensor.

According to some aspects, each radar sensor is arranged to determine respective radial velocities to the one or more detected targets, where each pair of range and radial velocity is associated with a complex value in a range-Doppler matrix.

This is an example of how the complex values can be determined, i.e., as corresponding elements from the range-Doppler maps of each transmit-receive antenna pair of each radar sensor.

According to some aspects, the processor is arranged to determine the difference in the ranges as a difference between a weighted sum of the magnitudes of the complex values in the range vector for each radar sensor.

According to some aspects, the processor is arranged to determine the difference in the ranges in dependence of a pre-determined radial velocity.

The difference in the ranges can be determined for a given radial velocity.

According to some aspects, the first radar sensor and the second radar sensor constitute front corner radar sensors of a vehicle, where the radar sensors are configured with an overlapping field-of-view, FoV, in a forward direction of the vehicle.

There are also disclosed herein control units, vehicles, computer program products associated with the above-mentioned advantages.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated. Further features of, and advantages with, the present invention will become apparent when studying the appended claims and the following description. The skilled person realizes that different features of the present invention may be combined to create embodiments other than those described in the following, without departing from the scope of the present invention.

BRIEF DESCRIPTION OF THE DRAWINGS

The present disclosure will now be described in detail with reference to the appended drawings, where:

Figure 1 schematically illustrates a vehicle with radar sensors;

Figure 2 shows an antenna array for target angle estimation;

Figures 3-5 illustrate example steps in a radar signal processing method;

Figures 6-7 show example radar antenna diagrams;

Figure 8 is a flow chart illustrating methods;

Figure 9 shows an example sensor signal processing system; and

Figure 10 illustrates an example computer program product.

DETAILED DESCRIPTION

Aspects of the present disclosure will now be described more fully hereinafter with reference to the accompanying drawings. The different arrangements, devices, systems, computer programs and methods disclosed herein can, however, be realized in many different forms and should not be construed as being limited to the aspects set forth herein. Like numbers in the drawings refer to like elements throughout.

The terminology used herein is for describing aspects of the disclosure only and is not intended to limit the invention. As used herein, the singular forms "a", "an" and "the" are intended to include the plural forms as well, unless the context clearly indicates otherwise.

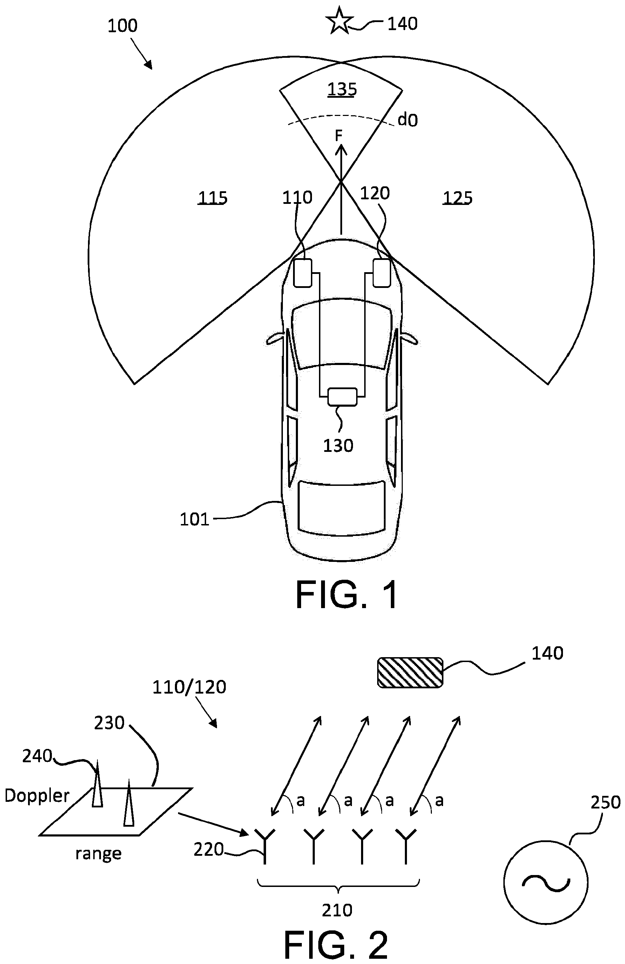

Figure 1 illustrates an example vehicle 101 comprising a radar system 100 allowing determination of angle to a target 140. The radar system comprises a first radar sensor 110 and a second radar sensor 120, both communicatively coupled to a central processing unit 130. In this case, the first radar sensor 110 is a front left corner radar transceiver, and the second radar transceiver 120 is a front right corner radar transceiver 120. The first radar sensor 110 has a first field of view 115, and the second radar sensor has a second field of view 125. These two example fields of view are overlapping, meaning that an overlapping region 135 is created where targets can be detected by both radar sensors jointly.

It is appreciated that the examples of the present disclosure will be given mainly in terms of two radar sensors, but the techniques disclosed herein are applicable to a much larger number of radar sensor units operating jointly for increased performance. Thus, generally, there are m radar sensors arranged on the vehicle.

Each radar sensor 110, 120 is arranged to transmit a radar signal over a radar bandwidth. According to some aspects, each radar sensor 110, 120 is arranged to transmit a frequency modulated continuous wave (FMCW) radar signal over the radar bandwidth, where a frequency chirp is swept over the radar bandwidth. Other types of radar signal formats may also be used, such as bandspread radar signals where orthogonal codes are used to spread a modulated signal over a wide frequency band, or an orthogonal frequency division multiplexed (OFDM) radar signal.

Given an FMCW radar signal format, the range to a target 140 may be determined based on a first Discrete Fourier Transform (DFT), or Fast Fourier Transform (FFT) and the radial velocity or Doppler frequency may be determined based on a second DFT or FFT, in a known manner. The result of applying a range FFT and a Doppler FFT is often denoted a range-Doppler map. A range-Doppler map is a matrix of complex values, where each column index corresponds to backscatter energy received at a given radar antenna from reflections at a given range, and where each row index corresponds to backscatter energy received at a given radar antenna from reflections at a given radial velocity relative to the position of the transceiver.

A good overview of rudimentary FMCW radar processing is given in the lecture notes "Introduction to mmwave Sensing: FMCW Radars" by Sandeep Rao, Texas Instruments, 2017.

Figure 2 illustrates an example radar sensor 110, 120 which comprises an antenna array 210, i.e., a plurality of antenna elements 220 comprising a combination of transmit antennas and receive antennas, where each pair of transmit antenna and receive antenna generates a respective radar channel. Each such radar channel gives rise to a respective range-Doppler map 230, indicating received radar signal energy 240 at different distances and radial velocities. Each range-Doppler map cell is a complex value associated with a phase and a magnitude, in a known manner.

An angle a from the radar sensor array 210 to a target 140 can be determined conveniently by a third FFT - the angle FFT, applied to range-Doppler cells from each range-Doppler map generated by each transmit-antenna pair in the radar sensor array. However, this third FFT requires all range-Doppler maps to be coherent or at least approximately coherent in phase. If phase noise is introduced at each trans-receive antenna pair without proper compensation, then the angle estimation will become corrupted.

Phase coherent radar signal processing can be facilitated by a single radio frequency (RF) oscillator feeding a reference signal to each antenna 220. However, this may not be easy without substantial signal power loss at the high frequencies involved in a modern automotive radar system 100.

The present disclosure is based on the realization that a coherent processing can be performed after down-conversion from RF to an intermediate frequency (IF), i.e., based on the frequency differences in the phase differences in the range-Doppler maps obtained from each transmit-receive antenna pair.

The proposed IF coherent processing method has the advantage that no distribution of a coherent RF reference is required and can therefore be implemented at a reduced complexity in terms of hardware. The proposed system has been shown to provide angular resolutions on the order of 2.46 degrees, which is more than enough to satisfy many of the present requirements imposed on automotive radar systems today.

The techniques disclosed herein rely on the determination of an IF phase, which essentially models the average range difference to targets seen from different radar sensors. For instance, with reference to the example radar system 100 in Figure 1, the first radar sensor 110 may see the target 140 at a first distance, while the second radar sensor may see the same target at a second distance. The difference in distances will give rise to a phase difference in the range Doppler maps of the two sensors, which can be used for coherent processing in order to improve angular resolution of a radar system comprising both radar sensors and a central processing unit configured to process signals from both radar sensors.

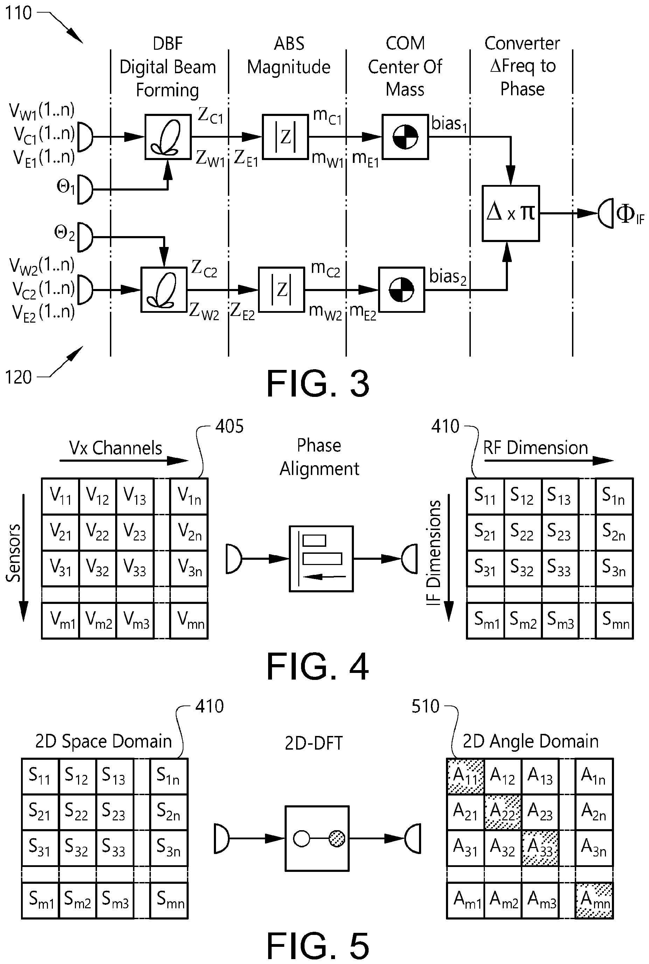

Figures 3-5 illustrate an example of how this might be achieved.

Figure 3 illustrates determination of the IF phase, according to an example. The radar signals from two radar sensors 110, 120 is first beamformed, from which a magnitude of received signal energy in different range-Doppler cells is determined. The center of mass of each range-Doppler map is then determined. The difference between these centers of masses is assumed to be comprised in the range

$$\pm \frac{C_0}{2 \cdot BW}$$

where $C_0$ is the speed of light and $BW$ is the radar bandwidth. This difference in range is then converted to a phase shift in the range $[-\pi, \pi]$.

An important part of the present disclosure is that a far-field assumption is made in the overlap region between radar sensors, such as between two corner radars as exemplified in Figure 1. Targets in this region will generate backscatter energy that arrives with high probability within the same range-bin at each radar sensor.

The far-field assumption which forms the basis for some of the proposed processing methods may not be valid close to the vehicle 101. Thus, optionally, the disclosed methods may only be performed for angle estimation of targets located beyond a certain threshold distance, i.e. not for all targets in the range-Doppler maps of the different transmit-receive antenna pairs. This threshold may be pre-determined or determined adaptively. Thus, with reference to Figure 1, to make the far-field assumption more viable, the methods disclosed herein may be applied only to targets at a given range from the radar sensors. I.e., only targets appearing in the overlap region beyond a pre-determined distance $d_0$ may be considered for enhanced angle determination. Targets appearing in the overlap region at closer distances may be processed using the sensors separately, or by other sensor fusion techniques.

Relative gravitational displacement of the scatter energy received from individual radar nodes, i.e. radar sensors, is evaluated. The gravitational shift has a range of values of

$$\pm \frac{c_0}{2 \cdot BW}$$

which corresponds to $\lambda_{IF}$ which denotes the IF wavelength. Accordingly, normalizing the shift to n results in the desired IF phase $\Phi_{IF}$. Note that other approaches are conceivable.

Steering angles $\theta_1$ and $\theta_2$ relate to the bearing directions of the radar nodes to a certain point in space. In case that a far-field assumption can be made, the steering angles would be the same $\theta_1 \approx \theta_2$. The rule of thumb for the far field is that the target distance is much greater than the aperture. This means that the steering angle is calculated separately for an automotive application.

First, the space domain is divided into two dimensions, so that the phase progression of both phase relationships, i.e. IF and RF, can be coherently integrated using a 2D-DFT. Before the radar signals are transferred to the angle domain, the space domain is adapted such that a linear phase progression is created in both dimensions. It is assumed that the IF phase $\Phi_{IF}$ is already determined that time

As shown in Figure 4, a matrix **V** 405 of complex elements is formed, where each row of the matrix **V** corresponds to a respective radar sensor 110, 120, and each column corresponds to a transmit-receive antenna pair 220, i.e. a Vx channel, of the radar sensor 110, 120, and where each element of the matrix corresponds to the complex value Vmn in the range vector of the corresponding radar sensor and transmit-receive antenna pair at a pre-determined index in the range vector. According to some aspects, the column dimension does not only consist of one transmit-receive antenna pair, but represents all transmit-receive antenna pair combinations, i.e. the Vx channels.

In order to be able to perform the angle FFT over the complex values from respective range-Doppler cell from each transmit-antenna pair, the IF dimension and the RF dimension must be aligned in phase. To achieve this, the IF phase is applied to each output value (each Vx channel, i.e., each transmit-receive antenna pair) from each radar sensor, as shown in Figure 4. This results in a phase aligned intermediate matrix **S** 410, a fused space domain matrix, to which a two-dimensional angle FFT (2D-DFT) can be applied, as shown in Figure 5. The received radar signal energy for each angle then appears as a magnitude of complex elements on the diagonal of an angle domain matrix **A** 510. There are elements $A_{MN}$ of the angle domain matrix **A** 510, where M is the number of rows in the angle domain and N is the number of column in the angle domain.

It should be noted that the row spacing corresponds to a uniform physical distance in the IF dimension. In contrast, the column spacing corresponds to the spacing grid of the RF domain. Typically one chooses a normalization to half lambda. Note that the value zero should be inserted for sparse elements.

To summarize, there is disclosed herein an automotive radar system 100 comprising at least a first radar sensor 110, a second radar sensor 120, and a central processing unit 130. The radar sensors are connected to the central processing unit via a data bus. This data bus may be associated with a limitation in data throughput. Thus, it is an advantage if the communication of raw sensor data between radar sensor and central processing unit can be avoided.

More than two radar sensor inputs can be fused in this manner, as long as the radar sensor units have at least partly overlapping fields of view. The more radar sensors that are fused together, the higher the angular resolution normally becomes.

Each radar sensor 110, 120 is arranged to transmit a radar signal over a radar bandwidth. The radar sensors are preferably configured to transmit their respective radar signals over the same bandwidth, and centered at the same center frequency, although this is not strictly necessary for the proposed methods to work. By appropriately adjusting the radar output signals, different bandwidths and even different center frequencies can be accounted for, which is an advantage.

Each radar sensor 110, 120 is arranged to determine respective ranges to one or more detected targets 140, where each determined range is associated with a complex value Vmn in a range vector. For instance, a radar sensor may be based on FMCW transmission and FFT processing. The complex value is then a value in the range-Doppler matrix. Notably, Doppler information is not required in order to perform the angle estimation. Angle estimation can be performed for a given radial velocity, or for a range of radial velocities.

The central processing unit 130 is arranged to determine a difference in the ranges determined by the first radar sensor 110 and by the second radar sensor 120. This difference in ranges will, as mentioned above, at least with high probability be confined to the range

$$\pm \frac{C_0}{2 \cdot BW}$$

where $C_0$ is the speed of light and where $BW$ is the radar bandwidth, due to the far-field assumption which normally holds, at least on the overlapping field of view 135 beyond some range threshold $d_0$. The difference in ranges will reflect the relative location of the radar sensors with respect to the overlapping field of view 135. The difference in ranges is preferably an average difference determined over the target ranges detected by each sensor in the overlapping field of view. One example of such difference in ranges is to just compute the weighted average of ranges detected by the first radar sensor and by the second radar sensor, weighted by the magnitude of each detected range, i.e., weighted in proportion to the received signal energy at each range.

According to some aspects, the central processing unit 130 is arranged to determine the difference in the ranges as a difference between a weighted sum of the magnitudes of the complex values in the range vector for each radar sensor 110, 120.

The simplest way to determine the IF phase is just to take the weighted mean of each range vector from each radar sensor, where the weights are proportional to magnitude of the range-Doppler map value. Intuitively, this gives the average difference of the peaks at each radar sensor.

According to some aspects, the central processing unit 130 is arranged to determine the difference in the ranges in dependence of a pre-determined radial velocity.

The difference in the ranges can be determined for a given radial velocity. In this case only detected signal energy from targets associated with a given radial velocity (or Doppler frequency) is considered when determining the difference in ranges. Alternatively, the Doppler dimension can be "collapsed" such that the range vector forming basis for the determining of the differences in range, comprise detected signal energy for any radial velocity.

To classify a target as being located in the overlapping field of view 135, each radar sensor may initially perform angle estimation using radar sensor data available locally and tag the targets which are estimated to be comprised in a pre-configured range of distance and angles constituting the overlapping field of view. The classification of targets as belonging to the overlapping field of view 135 or not can of course also be performed by the central processing unit 130.

The central processing unit 130 is arranged to convert the difference in ranges to an intermediate frequency IF phase value $\Phi_{IF}$ by relating the difference in ranges to the radar bandwidth BW. The IF phase value is limited to a range $[-\pi; \pi]$, and it relates to the difference in distances between the radar sensors to the range resolution of the radar sensors. Thus, if there is no difference in distances between the sensors, then the IF phase is zero. If the difference in distance is on the order of half of the range resolution, then the IF phase is close to $-\pi$ or $\pi$.

The central processing unit 130 is arranged to adjust the complex values Vmn in the range vectors by the IF phase value $\Phi_{IF}$ and determine an angle a to at least one of the detected targets 140 based on the adjusted complex values in the range vectors from each radar sensor 110, 120. By accounting for the IF phase, coherent processing of the range information from each radar sensor is enabled. Thus, the two radar sensors can be processed jointly as one large array, which increases the angle resolution significantly, due to the increase in effective aperture dimension of the joint antenna array. If a matrix of the complex values Vmn is denoted $V_{x,y}$, then this operation may be described as

$$V^1_{x,y} = V_{x,y} \cdot e^{j\Phi_x}$$

where $e^{j\Phi_x}$ represents rotation by the IF phase value, x [1...n] is a radar sensor index value, y [1...m] is a Vx channel index and n is the number of Vx channels per radar sensor.

According to some aspects, each radar sensor 110, 120 comprises an antenna array 210 configured with a plurality of transmit-receive antenna pairs 210, where each transmit-receive antenna pair is associated with a respective range vector. Normally each radar sensor will comprise its own antenna array, which enables the radar sensor to determine an angle to a target using only the radar data obtained locally. However, implementations where each radar sensor does not comprise an array, i.e., single antenna element radar sensors, are also possible.

According to some aspects, the central processing unit 130 is arranged to determine the angle a to at least one of the detected targets 140 by forming the matrix **V** 405 of complex elements, where each row of the matrix **V** corresponds to a respective radar sensor 110, 120, and each column corresponds to a transmit-receive antenna pair 220, i.e. a Vx channel, of the radar sensor 110, 120, and where each element of the matrix corresponds to the complex value Vmn in the range vector of the corresponding radar sensor and transmit-receive antenna pair at a pre-determined index in the range vector.

This means that each radar sensor 110, 120 reports a complex value Vmn indicative of detected signal energy corresponding to a given range and radial velocity at a given transmit-antenna pair 220 in its antenna array 210, and that the central processing unit 130 composes a matrix **V** 405 where each such complex value forms an element. The processing of this matrix **V** by the herein proposed methods results in estimated angles for the received signal energy. For instance, suppose there are two targets at 5m from the radar sensors 110, 120 and moving with the same radial velocity but at different angles. The reported complex values will then indicate this received signal energy, and the angle processing by the herein proposed method will then be able to determine that the received signal energy is actually received from the separate targets at different angles relative to the two or more radar sensors 110, 120. The matrix **V** comprising the complex values Vmn is shown to the left in Figure 4, prior to processing by, e.g., the IF phase.

According to some aspects, the central processing unit 130 is arranged to determine the angle a by performing a phase alignment over the matrix **V,** where each row is rotated in dependence of the first element Vx1 in the row. This essentially means that the first transmit-receive antenna pair of each radar sensor is taken as phase reference for that radar sensor, such that each row in the matrix indicates phase relative to the first transmit-receive antenna pair of that radar sensor. If a matrix of the complex values Vmn is denoted $V_{x,y}$, then this operation may be described as

$$V^2_{x,y} = V_{x,y} \cdot \left( \frac{V_{x,1}}{|V_{x,1}|} \right)^{-T}$$

According to some aspects, the central processing unit 130 is arranged to determine the angle a by applying a pre-determined calibration phase rotation to at least some of the elements of the matrix. Each radar sensor may not be mounted in exactly the same way, i.e., with small differences in bore-sight direction and height over ground. To account for such differences, a pre-determined calibration may be performed in order to align the outputs from the different sensors. If the matrix **405** of the complex values Vmn is denoted $V_{x,y}$, then this operation may be described as

$$V^3_{x,y} = V_{x,y} \cdot e^{j\Upsilon_{x,y}}$$

where Y is an RF correction phase. Applying operations in sequence, we have

$$S_{x,y} = V_{x,y} \cdot e^{j\Upsilon_{x,y}} \cdot e^{j\Phi_x} \cdot \left( \frac{V_{x,y}}{|V_{x,1}|} \right)^{-T}$$

where $S_{x,y}$ is a fused space domain matrix 410 that comprises complex elements to which coherent angle processing can be applied in order to determine angle of incoming radar backscatter.

According to some aspects, the central processing unit 130 is arranged to determine the angle a to at least one of the detected targets 140 by zero-padding the rows of the matrix V in dependence of the IF phase value $\Phi_{IF}$ for each radar sensor 110, 120 with respect to a pre-determined reference radar sensor.

It is realized that the elements of the matrix **V** 405, also denoted as $V_{x,y}$, may not correspond to the proper spatial sampling intervals required for angle processing. Thus, zero-padding may be required between columns to account for irregular spacing between antenna elements in each radar sensor, and zero-padding may be required in order to account for differences and irregularities in the IF phase between radar sensors.

It should be noted that the row spacing corresponds to a uniform physical distance in the IF dimension. In contrast, the column spacing corresponds to the spacing grid of the RF domain. Typically one chooses a normalization to half lambda. Note that the value zero must be inserted for sparse elements.

According to some aspects, the central processing unit 130 is arranged to determine the angle a to at least one of the detected targets 140 by zero-padding the columns of the matrix **V** in dependence of the geometry of the transmit-receive antenna pairs 210 of each radar sensor. This is beneficial if the IF phase differs between different radar sensors.

According to some aspects, the central processing unit 130 is arranged to determine the angle a to at least one of the detected targets 140 by a two-dimensional Discrete Fourier Transform, DFT, of the matrix **V** after at least phase adjustment by at least the IF phase value $\Phi_{IF}$ for each radar sensor 110, 120.

This means that the phase aligned intermediate matrix **S** 410 is formed by phase alignment of the matrix **V** 405, and subject to a two-dimensional DFT that results in the angle domain matrix **A** 510.

According to some aspects, each radar sensor 110, 120 is arranged to determine respective radial velocities to the one or more detected targets 140, where each pair of range and radial velocity is associated with a complex value Vmn in a range-Doppler matrix.

This is an example of how the complex values Vmn can be determined, i.e., as corresponding elements from the range-Doppler maps of each transmit-receive antenna pair of each radar sensor.

According to some aspects, the first radar sensor 110 and the second radar sensor 120 constitute front corner radar sensors of a vehicle 101, where the radar sensors 110, 120 are configured with an overlapping field-of-view, FoV, 135 in a forward direction F of the vehicle 101.

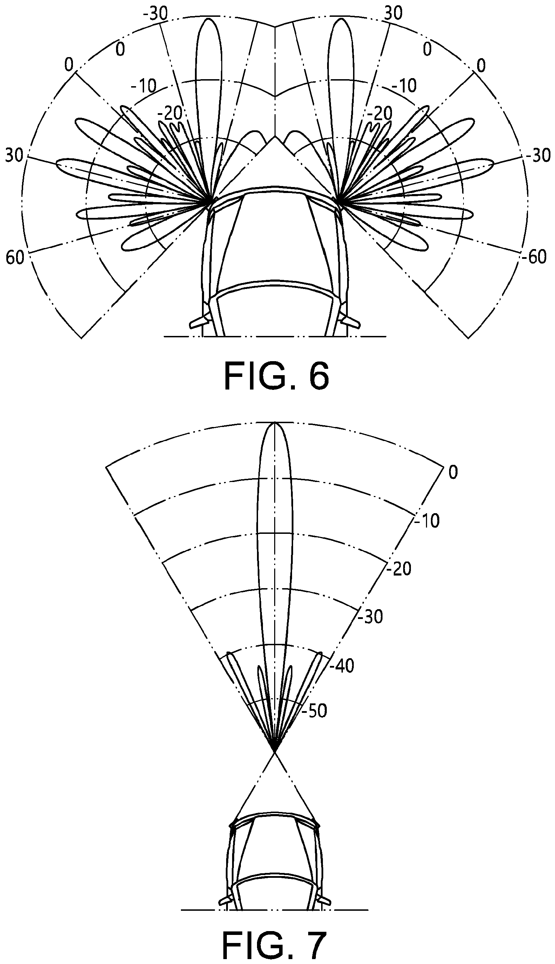

This is also illustrated in the example radar antenna diagram in Figure 6 with scales in dB and angle. Figure 7 shows an example radar antenna diagram of the fused overlap area 137 with scales in dB and angle.

The present disclosure also relates to a vehicle 101 comprising the automotive radar system 100 according to any previous claim.

The present disclosure also relates to a central processing unit, CPU, 130 for an automotive radar system 100 comprising at least a first radar sensor 110 and a second radar sensor 120. The CPU 130 is arranged to receive complex values Vmn in a range vector from each of the radar sensors 110, 120, where the CPU 130 is arranged to determine a difference in the ranges determined by the first radar sensor and by the second radar sensor, based on the range vectors. The CPU 130 is arranged to convert the difference in ranges to an intermediate frequency, IF, phase value $\Phi_{IF}$ by relating the difference in ranges to a radar bandwidth BW of the radar sensors, and to determine an angle a to at least one detected target 140 by processing the complex values Vmn in the range vectors from each radar sensor 110, 120 based on the IF phase value $\Phi_{IF}$.

According to some aspects, the central processing unit, CPU, 130 is generally constituted by a processor. The processor can for example be constituted by at least one of a central processing unit, a processing unit operating as slave to a master processing unit, or a distributed processing system comprising two or more processing units.

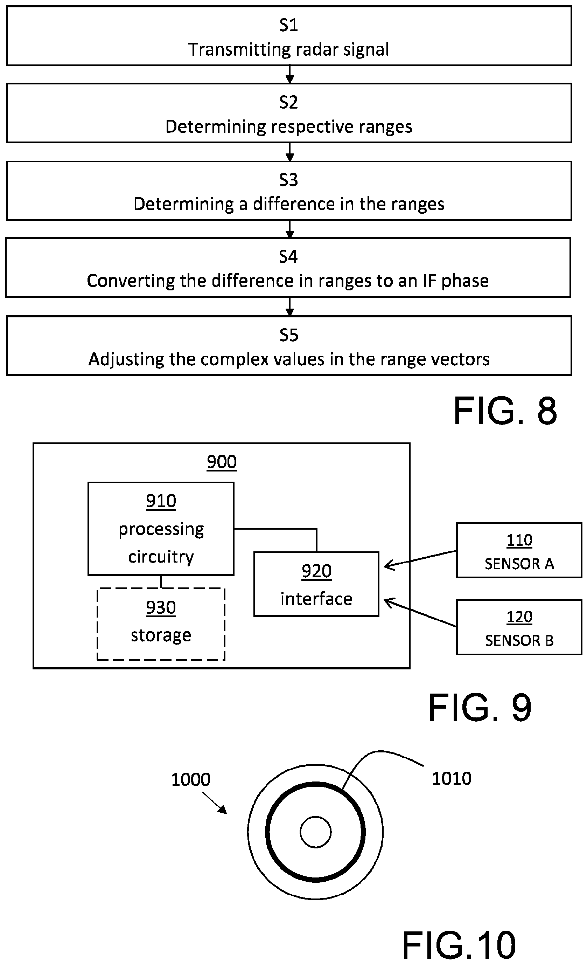

With reference also to Figure 8, the present disclosure also relates to a method in an automotive radar system 100 that comprises at least a first radar sensor 110, a second radar sensor 120, and a processor 130. The method comprises:

transmitting (S1) a radar signal over a radar bandwidth,

determining (S2) respective ranges to one or more detected targets 140, where each determined range is associated with a complex value Vmn in a range vector,

and determining (S3) a difference in the ranges determined by the first radar sensor 110 and by the second radar sensor 120.

The method further comprises:

converting (S4) the difference in ranges to an intermediate frequency, IF, phase value $\Phi_{IF}$ by relating the difference in ranges to the radar bandwidth BW, and

adjusting (S5) the complex values Vmn in the range vectors by the IF phase value $\Phi_{IF}$ and determine an angle a to at least one of the detected targets 140 based on the adjusted complex values in the range vectors from each radar sensor 110, 120.

Figure 9 schematically illustrates, in terms of a number of functional units, the components of a radar sensor signal processing system 900 according to an embodiment of the discussions herein. Processing circuitry 910 is provided using any combination of one or more of a suitable central processing unit CPU, multiprocessor, microcontroller, digital signal processor DSP, etc., capable of executing software instructions stored in a computer program product, e.g. in the form of a storage medium 930. The processing circuitry 910 may further be provided as at least one application specific integrated circuit ASIC, or field programmable gate array FPGA. The processing circuitry thus comprises a plurality of digital logic components.

Particularly, the processing circuitry 910 is configured to cause the system 900 to perform a set of operations, or steps. For example, the storage medium 930 may store the set of operations, and the processing circuitry 910 may be configured to retrieve the set of operations from the storage medium 930 to cause the system 900 to perform the set of operations. The set of operations may be provided as a set of executable instructions. Thus, the processing circuitry 910 is thereby arranged to execute methods as herein disclosed.

The storage medium 930 may also comprise persistent storage, which, for example, can be any single one or combination of magnetic memory, optical memory, solid state memory or even remotely mounted memory.

The sensor signal processing system 900 further comprises an interface 920 for communications with at least one external device, such as a first radar sensor 110 and a second radar sensor 120. As such the interface 920 may comprise one or more transmitters and receivers, comprising analogue and digital components and a suitable number of ports for wireline communication. The V2X transceiver 112 and the vehicle sensor 111 may be integrated into a single unit, possibly also comprising the interface 920.

The processing circuitry 910 controls the general operation of the system 900, e.g. by sending data and control signals to the interface 920 and the storage medium 930, by receiving data and reports from the interface 920, and by retrieving data and instructions from the storage medium 930. Other components, as well as the related functionality, of the control node are omitted in order not to obscure the concepts presented herein.

Figure 10 shows a computer program product 1000 comprising computer executable instructions 1010 to execute any of the methods disclosed herein.

**Claims**

1. An automotive radar system (100) comprising at least a first radar sensor (110), a second radar sensor (120), and a processor (130),

where each radar sensor (110, 120) is arranged to transmit a radar signal over a radar bandwidth,
where each radar sensor (110, 120) is arranged to determine respective ranges to one or more detected targets (140), where each determined range is associated with a complex value (Vmn) in a range vector,

where the processor (130) is arranged to determine a difference in the ranges determined by the first radar sensor (110) and by the second radar sensor (120),

where the processor (130) is arranged to convert the difference in ranges to an intermediate frequency, IF, phase value ($\Phi_{IF}$) by relating the difference in ranges to the radar bandwidth (BW), and

where the processor (130) is arranged to adjust the complex values (Vmn) in the range vectors by the IF phase value ($\Phi_{IF}$) and determine an angle (a) to at least one of the detected targets (140) based on the adjusted complex values in the range vectors from each radar sensor (110, 120).

2. The automotive radar system (100) according to claim 1, where each radar sensor (110, 120) comprises an antenna array (210) configured with a plurality of transmit-receive antenna pairs (210), where each transmit-receive antenna pair is associated with a respective range vector.

3. The automotive radar system (100) according to claim 2, where the processor (130) is arranged to determine the angle (a) to at least one of the detected targets (140) by forming a matrix **V** (405) of complex elements, where each row of the matrix **V** (405) corresponds to a respective radar sensor, and each column corresponds to a transmit-receive antenna pair (220) of the radar sensor (110, 120), and where each element of the matrix corresponds to the complex value (Vmn) in the range vector of the corresponding radar sensor (110, 120) and transmit-receive antenna pair (220) at a pre-determined index in the range vector.

4. The automotive radar system (100) according to claim 3, where the processor (130) is arranged to determine the angle (a) by performing a phase alignment over the matrix **V** (405), where each row is rotated in dependence of the first element (Vx1) in the row.

5. The automotive radar system (100) according to claim 3 or 4, where the processor (130) is arranged to determine the angle (a) by applying a pre-determined calibration phase rotation to at least some of the elements of the matrix **V** (405).

6. The automotive radar system (100) according to any of claims 3-5, where the processor (130) is arranged to determine the angle (a) to at least one of the detected targets (140) by zero-padding the rows of the matrix **V** (405) in dependence of the IF phase value ($\Phi_{IF}$) for each radar sensor with respect to a pre-determined reference radar sensor.

7. The automotive radar system (100) according to any of claims 3-6, where the processor (130) is arranged to determine the angle (a) to at least one of the detected targets (140) by zero-padding the columns of the matrix **V** (405) in dependence of the geometry of the transmit-receive antenna pairs (210) of each radar sensor.

8. The automotive radar system (100) according to any of claims 3-7, where the processor (130) is arranged to determine the angle (a) to at least one of the detected targets (140) by a two-dimensional Discrete Fourier Transform, DFT, of the matrix **V** (405) after at least phase adjustment by at least the IF phase value ($\Phi_{IF}$) for each radar sensor.

9. The automotive radar system (100) according to any previous claim, where each radar sensor (110, 120) is arranged to transmit a frequency modulated continuous wave, FMCW, radar signal over the radar bandwidth.

10. The automotive radar system (100) according to any previous claim, where each radar sensor (110, 120) is arranged to determine respective radial velocities to the one or more detected targets (140), where each pair of range and radial velocity is associated with a complex value (Vmn) in a range-Doppler matrix.

11. The automotive radar system (100) according to any previous claim, where the processor (130) is arranged to determine the difference in the ranges as a difference between a weighted sum of the magnitudes of the complex values in the range vector for each radar sensor.

12. The automotive radar system (100) according to any previous claim, where the processor (130) is arranged to determine the difference in the ranges in dependence of a pre-determined radial velocity.

13. The automotive radar system (100) according to any previous claim, where the first radar sensor (110) and the second radar sensor (120) constitute front corner radar sensors of a vehicle (101), where the radar sensors (110, 120) are configured with an overlapping field-of-view, FoV, (135) in a forward direction (F) of the vehicle (101).

14. A vehicle (101) comprising the automotive radar system (100) according to any previous claim.

15. A processor (130) for an automotive radar system (100) comprising at least a first radar sensor (110) and a second radar sensor (120),

where the processor (130) is arranged to receive complex values (Vmn) in a range vector from each of the radar sensors (110, 120),

where the processor (130) is arranged to determine a difference in the ranges determined by the first radar sensor and by the second radar sensor, based on the range vectors,

where the processor (130) is arranged to convert the difference in ranges to an intermediate frequency, IF, phase value ($\Phi_{IF}$) by relating the difference in ranges to a radar bandwidth (BW) of the radar sensors, and

where the processor (130) is arranged to determine an angle (a) to at least one detected target (140) by processing the complex values (Vmn) in the range vectors from each radar sensor (110, 120) based on the IF phase value ($\Phi_{IF}$).

The present disclosure is not limited to the above example but may vary freely within the scope of the appended claims. For example, the present disclosure is applicable for any type of vehicle such as a car, an airplane, a ship etc.

FIG. 1

FIG. 2

FIG. 3

FIG. 4

FIG. 5

## FIG. 6

## FIG. 7

| S1 |
| --- |
| Transmitting radar signal |

↓

| S2 |
| --- |
| Determining respective ranges |

↓

| S3 |
| --- |
| Determining a difference in the ranges |

↓

| S4 |
| --- |
| Converting the difference in ranges to an IF phase |

↓

| S5 |
| --- |
| Adjusting the complex values in the range vectors |

## FIG. 8

## FIG. 9

## FIG.10

Europäisches
Patentamt

European
Patent Office

Office européen
des brevets

# EUROPEAN SEARCH REPORT

Application Number

EP 21 19 1838

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 3 671 272 A1 (VEONEER SWEDEN AB [SE]) 24 June 2020 (2020-06-24) * abstract; figures 1, 2A * * paragraphs [0001] – [0003], [0009], [0029], [0037] – [0040], [0049] – [0050] * | 1-15 | INV. G01S7/35 G01S13/34 G01S13/58 G01S13/87 G01S13/931 |
| A | US 2020/341134 A1 (ROGER ANDRE [DE] ET AL) 29 October 2020 (2020-10-29) * abstract; figures 1-5 * * paragraphs [0048] – [0068] * | 1-15 | ADD. G01S13/46 |
| A | EP 3 712 653 A1 (NXP USA INC [US]) 23 September 2020 (2020-09-23) * abstract; figure 1 * * paragraphs [0001], [0006], [0070] * | 1-15 | |

TECHNICAL FIELDS SEARCHED (IPC)

G01S

The present search report has been drawn up for all claims

| Place of search | Date of completion of the search | Examiner |
|---|---|---|
| Munich | 1 February 2022 | Lupo, Emanuela |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.......................................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 19 1838

This annex lists the patent family members relating to the patent documents cited in the above-mentioned European search report.
The members are as contained in the European Patent Office EDP file on
The European Patent Office is in no way liable for these particulars which are merely given for the purpose of information.

01-02-2022

| Patent document cited in search report | | | Publication date | Patent family member(s) | | | Publication date |
|---|---|---|---|---|---|---|---|
| EP 3671272 | A1 | | 24-06-2020 | NONE | | | |
| US 2020341134 | A1 | | 29-10-2020 | CN | 111856449 | A | 30-10-2020 |
| | | | | DE | 102020107804 | A1 | 29-10-2020 |
| | | | | US | 2020341134 | A1 | 29-10-2020 |
| EP 3712653 | A1 | | 23-09-2020 | CN | 111708025 | A | 25-09-2020 |
| | | | | EP | 3712653 | A1 | 23-09-2020 |
| | | | | US | 2020300995 | A1 | 24-09-2020 |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **SANDEEP RAO.** Introduction to mmwave Sensing: FMCW Radars. *Texas Instruments,* 2017